Europäisches Patentamt

European Patent Office

Office européen des brevets

(11) Publication number: 0 374 322
A1

## EUROPEAN PATENT APPLICATION

(21) Application number: 88312225.1

(22) Date of filing: 22.12.88

(51) Int. Cl.⁵: F24C 1/12, A01K 31/20

(43) Date of publication of application:
27.06.90 Bulletin 90/26

(84) Designated Contracting States:
DE ES FR GB IT NL

(71) Applicant: **Kanesaka, Ichiro**
**No. 3-1-1014, 7-chome Hikarigaoka**
**Nerima-ku Tokyo(JP)**

(72) Inventor: **Kanesaka, Ichiro**
**No. 3-1-1014, 7-chome Hikarigaoka**
**Nerima-ku Tokyo(JP)**

(74) Representative: **Webb, Frederick Ronald et al**
**G.F. Redfern & Co. Marlborough Lodge 14**
**Farncombe Road**
**Worthing West Sussex BN11 2BT(GB)**

(54) Heater unit.

(57) A heater unit for the livestock breeding industry in which a reflector plate (9) is provided of dished shape or in the shape of an inverted truncated cone at the top and a burner (1) is positioned underneath the truncated part of said reflector plate. A first heat-radiating surface element (8a) consisting of a metal mesh or a perforated plate is so arranged that the radially-directed flame holes (5) of said burner (1) are confined between it and the lower part of the reflector plate (9) and a second heat-radiating surface element (8b) also consisting of a metal mesh or a perforated plate, is mounted between the reflector plate (9) and the flame holes (5) of the burner (1).

*F I G. 1*

EP 0 374 322 A1

## HEATER UNIT

The present invention relates to a heater unit for the livestock breeding industry, and more specifically, to a device comprising a heat-radiating plate heated by a gas burner (usually LP as) and providing heat in the form of radiation heat for the rearing of livestock, poultry, and other animals.

The familiar heating units of this type include such generally known heating facilities as ruminant breeders, piglet rearing units, tobacco plant or cereal thermo-dryers; Japanese Utility Model Registration No. 921354 may be cited as an example showing the construction of a ruminant breeder.

The design of this type of heating system is characterised in that, in most cases, the heat-radiating plate of such units has a large surface area (usually referred to as a "skeleton") and that the surface texture is unevenly formed.

Heating units both of this conventional type and also in accordance with the present invention are illustrated in the drawings, in which:-

Figure 1 is a schematic side view, partly in section of a heating unit according to the invention;

Figure 2 is a schematic side view to illustrate the heating unit of the invention in use;

Figures 3, 5 and 8 are similar schematic side views of the upper part of a burner of a heater unit not in accordance with the invention using only a single heat-radiating surface element, at various flame settings;

Figures 4, 6 and 9 are similar schematic side views of the upper part of a burner of a heater unit in accordance with the invention using two heat-radiating surface elements, at various flame settings corresponding to those of Figures 3, 5 and 8 respectively; and

Figure 7 is a side view, partly in section, of a conventional heating unit using as radiation plate, a "skeleton" of known type.

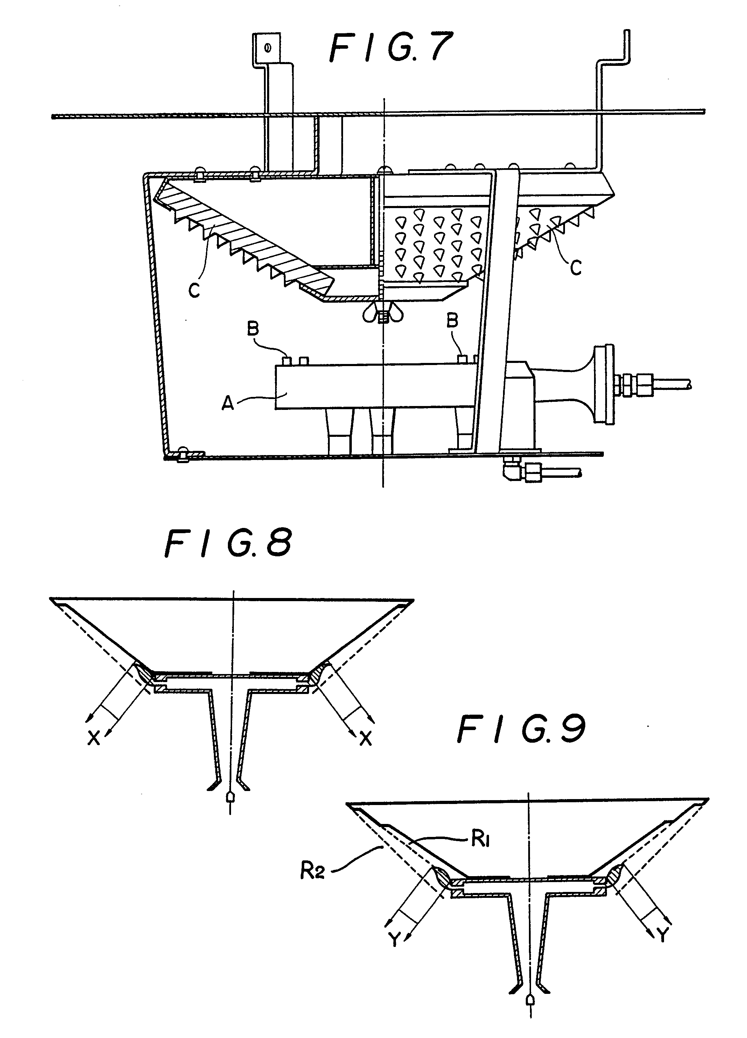

As can be seen in the partially sectional side view of such a heating unit given in Figure 7 of the drawings, this type of heater is designed so that it has, mounted in the form of an inverted truncated cone, a radiating plate C consisting of a skeleton opposed to the flame holes B, B ... of a gas burner A.

If, however, such a skeleton is used as the heat-radiating plate, the system will give rise to the problem that the heater has a large weight in proportion to its surface area and that the overall volume of the heater tends to be large also, whilst the unit is extremely vulnerable to external impact.

The present invention has taken into account the problems associated with the conventional technology referred to above and its object is to provide a sturdy heater whose heat-radiating plate consists of a metal structure and is distinguished by having a small volume and a light weight in comparison with the skeleton previously referred to while being resistant to external shock and impact.

To achieve this object, a heater unit in accordance with the invention, comprises a reflector plate of dished shape or in the shape of an inverted truncated cone and a burner provided with flame holes positioned beneath the central part of said reflector plate, characterised in that a first heat-radiating surface element consisting of a metal mesh or a perforated plate is so arranged that the flame holes of said burner are confined between said element and the lower part of said reflector plate and that a second heat-radiating surface element also consisting of a metal mesh or a perforated plate is mounted between said reflector plate and the flame holes of the burner.

In a preferred embodiment, the burner has a gas-atomizing nozzle at its bottom end and, at its top end, a burner unit with radially-arranged flame holes provided over the entire periphery. Two heat-radiating elements in the form of upwardly open dishes or inverted truncated cones consisting of metal mesh or perforated metal plate or of combinations thereof are so disposed in parallel that said radially-arranged flame holes are positioned between the two heat-radiating elements, while a further heat reflector plate of dished shape or in the shape of an inverted truncated cone is disposed in like manner over the double heat-radiating elements. Expediently, an outer reflector shaped approximately in the form of a parabola is mounted on the top of the burner through a support member in such a manner that the heater as a whole is in the shape of a lamp; a two-position open/closed tap or a dial-type tap connected to the gas burner may be arranged on the periphery of the reflector shade.

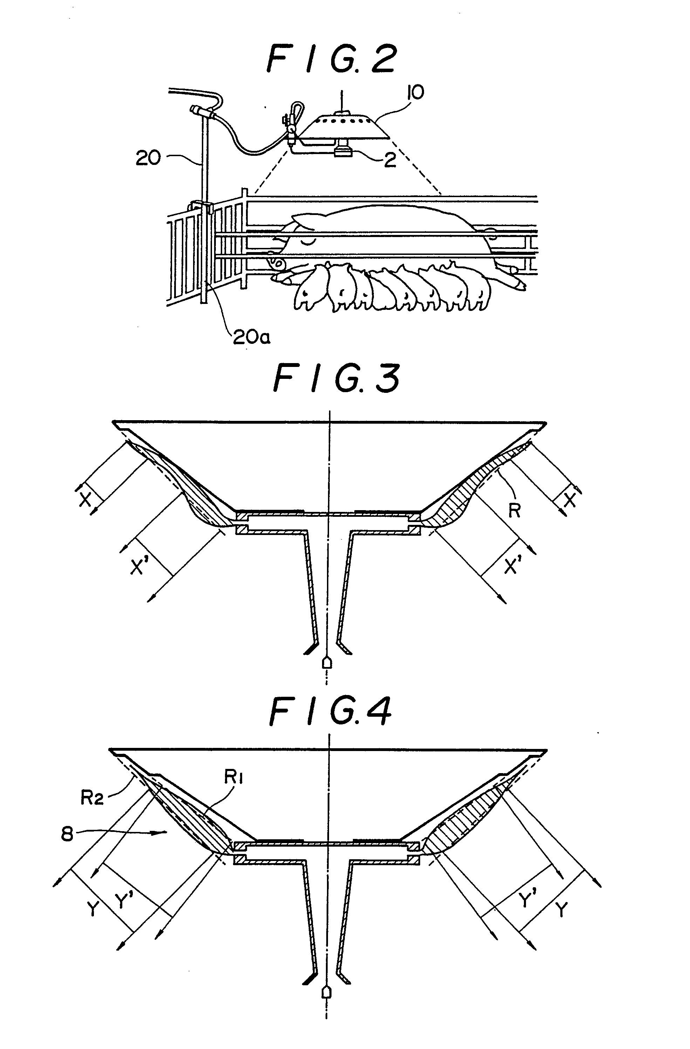

The double heat-radiating element arrangement described above has been extensively tested and the test results demonstrate that, with only a single heat-radiating element as shown in Figure 3, the flow of the flame is unexpectedly complicated, so that when a thermostat is permanently connected to follow the changes in temperature within a specified temperature range, the gas rate supplied to the burner will change continually so that the size of the flame will also change.

Thus, when the gas supply rate is at its maximum, the flame will contact the heat-radiating surface R (Figure 3) mainly in two areas on the inner and outer sides, as shown in the Figure, thus producing two separate radiation heat emission ranges X and X′, and, furthermore, since the inner

2

surface is subject to the low-temperature internal flame, the heat-radiating surface R will not reach the red-hot condition so that, in effect, only the outside part in contact with the high-temperature area will reach the red-hot state.

In contrast, however, in the heating unit in accordance with the present invention using two heat-radiating elements R1 and R2 as shown in Figure 4, the flames burn in the manner shown in that Figure, producing heat radiation emission ranges Y and Y′ as compared with the radiation heat emission range X and X′ of Figure 3, the result being a substantial increase in thermal output.

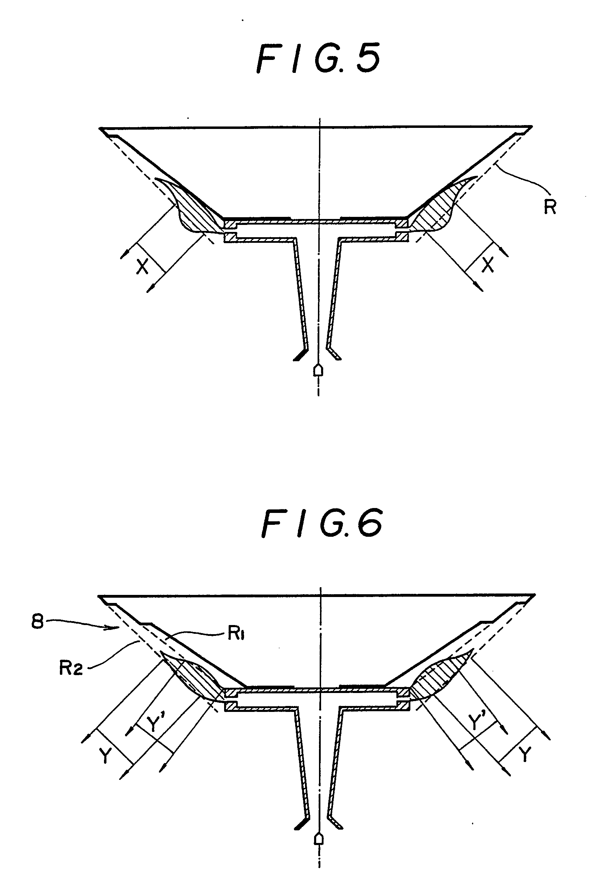

Whilst Figure 5 shows a system with a single heat-radiating element in an operating condition in which the flame becomes gradually smaller, Figure 6 shows a double-plate heater in accordance with the invention which has clearly a larger heat-radiating surface area and thus a higher heat output.

Figure 8 shows a further example of a heater construction with a single heat-radiating element in the condition in which the gas supply rate has been reduced so that the flame size has accordingly become very small. In this instance, no physical contact can be observed between the heat-radiating plate and the flames so that this form of heater does not provide its heating action by a virtually complete radiation effect but allows most of the heat to escape ineffectively with the burning gas.

In contrast thereto, Figure 9 shows a double heat-radiating plate construction in accordance with the invention wherein two heat-radiating elements are stack-mounted one upon the other so that adequate contact between the flames and the heat-radiating element R1 is maintained even when the gas supply rate has been throttled back so that the flame size has become very small.

The double heat-radiating element construction has the further advantage that as the two elements heat each other they have a mutually reinforcing effect, thereby enhancing the radiation heat output so as to achieve a faster attainment of the red-hot condition and to maintain a lasting effect.

The heater in accordance with the present invention may be provided with a thermostat device mounted on the dial-type gas tap previously referred to with a detector set to a temperature within the desired heating range so that the gas delivery rate is automatically controlled in such a manner as to permanently maintain said heating range at the desired temperature.

The burner of the heater in accordance with the present invention produces flames from flame holes radially mounted in the top part thereof, and since these flames burn in the space between the two heat-radiating elements, it follows that said two heat-radiating plates reach the red-hot condition by mutually heating each other so that the heat-radiating surfaces are heated to the red-hot state under a mutually reinforcing radiation effect, whilst, at the same time, the red-hot radiation of each of said two heat-radiating plates is extremely uniform irrespective of the shape and size of the flames; extensive experimental evidence clearly indicates that such radiating elements are particularly effective in dissipating far-infrared radiation.

In addition, a reflector plate is disposed along the radiating surface and to enhance its effectiveness still further, a parabolic reflector shade may be mounted thereabove to ensure that the radiation heat escaping upwards is uniformly reflected within a predetermined region.

Moreover, the thermostat device with a detector adjustable to any desired position automatically regulates the gas feed rate in accordance with the selected detector adjustment position so that it is capable of permanently maintaining, at the desired temperature, the pre-set range in the vicinity of said adjustment position.

The above and other objects, effects, features and advantages of the present invention will become more apparent from the following description of a preferred embodiment thereof taken in conjunction with the accompanying drawings.

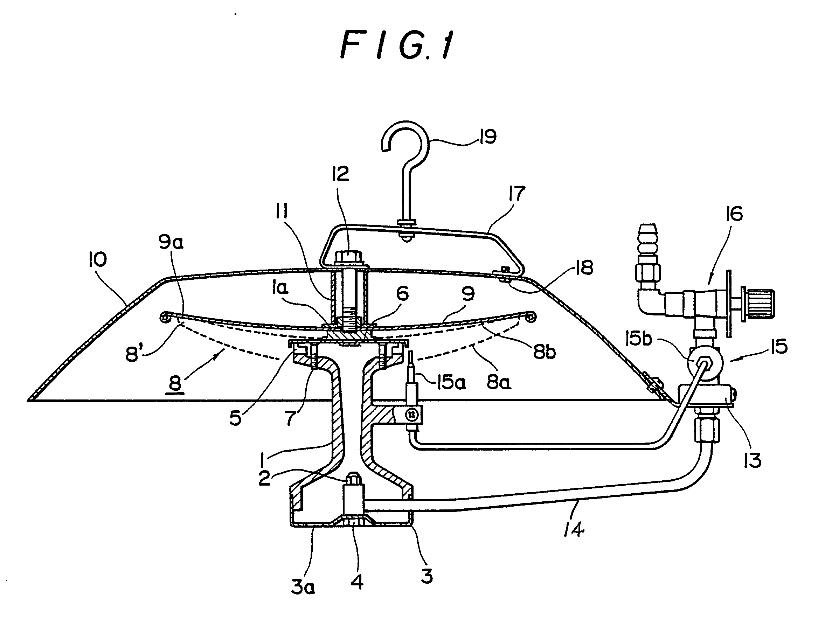

Referring now to Figure 1, which shows a side view partially in section, of a heater unit according to the invention, a gas burner 1 whose cross-section is in the form of a rail is provided with a gas nozzle 2 protruding upwards from the centre at the bottom, with a cover 3 provided with air inlet apertures 3a mounted on the circumference thereof and held by a retainer nut 4. An annular cap 6 with a protruding central part 1a is fastened to the upper end of the burner 1 with bolts 7 in such a manner that a plurality of radially-directed flame holes 5 is formed round the burner periphery.

Two heat-radiating elements 8 of concave shape are mounted successively along the ascending direction of the flames, the first radiating element 8a being a perforated metal plate and the second radiating element 8b another perforated metal plate, the two plates being so disposed that the plurality of flame holes 5, 5 ... disposed around the periphery of the burner is located between the two heat-radiating plates 8. A reflector plate 9 is additionally mounted above the radiation element assembly and spaced therefrom in such a manner that the periphery 9a of the reflector plate 9 is fastened to the periphery 8′ of the double heat-radiating plates 8.

In the embodiment described, the heat-radiating elements consist of perforated metal plates arranged so that they form a first heat-radiating surface 8a and a second heat-radiating surface 8b. Apart from the use of perforated plates, the heat-radiating element assembly may alternatively consist of first and second radiating elements 8a, 8b both consisting of metal mesh, or the first radiating element 8a may consist of a perforated metal plate whilst the second radiating element 8b consists of metal mesh or vice versa.

Whereas in the embodiment described above, an arrangement is used in which a space is provided between the second heat-radiating surface element 8b and the reflector plate 9, it is also possible to arrange the surface element and the reflector plate so that they are in close mutual contact and, if necessary, it may also be possible to provide adhesive areas in certain parts.

A reflector shade shaped approximately in the form of a parabola is illustrated at 10, preferably consisting of aluminium. This reflector shade 10 is secured to the centre of the reflector plate 9, by means of a bolt 12 through a spool-shaped support element 11.

A collar bracket 13 protruding from the periphery of said reflector shade 10 and fastened thereto, supports a gas pipe 14 that is connected to the gas nozzle 2 and also has a shut-off valve 15b forming part of a gas-extinguisher safety device 15 provided with a sensor device 15a. It also features a dial-type tap 16 with a knob.

A handle 17 has one end secured by the bolt 12 fitted into the centre of said reflector shade 10, whilst the other end is secured by means of a screw 18 in a location on a radius of the reflector shade 10 in such a manner as to extend in the direction of the collar bracket 13, with a suspension hook 19 being located on the handle in a position-adjustable manner.

When, in the present embodiment as described above, the dial tap 16 is operated to feed propane gas at the desired rate to the gas nozzle 2, the gas passing through the path inside said gas burner 1 will be mixed with the air entering from the air inlet apertures 3a with the formation of a gas/air mixture which leaves in the radial direction through the flame holes 5, 5... and ignites to form a flame heating the first heat-radiating surface element 8a and the second heat-radiating surface element 8b simultaneously, the first and second radiating surface elements 8a and 8b mutually heating each other and emitting a large amount of far-infrared radiation. The two radiating surface elements 8a and 8b are further assisted in achieving the red-hot condition by the reflector plate 9 which directly reflects in a downward direction the radiation heat directed upwardly while simultaneously reflecting in the downward direction through and across the two radiating surface elements 8a and 8b. Furthermore, the reflector shade 10 shaped approximately in the form of a parabola concentrates the radiation heat escaping in the upward direction and uniformly reflects this radiation within a predetermined range. Through the mutual interaction of these elements, it is possible to achieve an extremely efficient uniform heating action within a specified range.

As previously described, a gas cut-off safety device 15 may be provided to interrupt the gas supply by closing a shut-off valve 15b controlled through a sensor device 15a so that safety is assured even when the burner flame has been extinguished for reasons such as a draught or gust of wind.

Since, furthermore, as illustrated in Figure 2, a thermostat device 20 with a detector device 20a is preferably provided, it is possible to adjust the temperature to any value within the desired range by selecting the position of said detector device accordingly, so that it is consequently possible to achieve the optimum breeding conditions for raising animals such as piglets within a small pen area, as illustrated.

As previously pointed out, the location, in accordance with the present invention, of flame holes in the space between the two heat-radiating elements facilitates the heating process that brings the radiating elements to red heat (emission of far-infrared radiation) at a high efficiency and permits the uniform and efficient radiation of the radiated heat within a desired range, so that the radiating elements absorb the thermal energy (heat) in any condition, from a high to a low flame setting, with the effective emission of far-infrared radiation and the most powerful suppression of the emission of wasteful radiation in the visible spectrum which is devoid of any heating effect, so that such far-infrared radiation has a high heating power for the direct warming of the target recipients of the heat radiation and since, furthermore, the reflector shade is shaped in the approximate form of a parabola it also follows that the heater unit is capable of concentrating the heat radiation and distributing it in a uniform manner, without any wasteful dissipation or dispersion of the infrared radiation.

The heater unit in accordance with the present invention does not require the use of a filter and since it can be washed with water, it is also easy to look after and clean. Furthermore, the use of a gas cut-off safety device eliminates the risk of fire and the absence of a skeleton reduces the weight of the heater and minimises its volume and height, so that the heater unit can be produced at a proportionately lower cost and is distinguished by a considerable number of significant further advantages and practical user benefits, such as its ability permanently to maintain the specified range at the desired temperature through the use of a thermostat device.

## Claims

1. A heater unit for the livestock breeding industry, comprising a reflector plate of dished shape or in the shape of an inverted truncated cone and a burner provided with flame holes positioned beneath the central part of said reflector plate, characterised in that a first heat-radiating surface element consisting of a metal mesh or a perforated plate is so arranged that the flame holes of said burner are confined between said element and the lower part of said reflector plate and that a second heat-radiating surface element also consisting of a metal mesh or a perforated plate is mounted between said reflector plate and the flame holes of the burner.

2. A heater unit for the livestock breeding industry comprising a burner having a gas delivery nozzle at the bottom end thereof and a double heat-radiating element arrangement in the form of an inverted truncated cone is mounted around the top of the burner which is provided with a plurality of radially-directed flame holes, wherein said double heat-radiating arrangement is formed by a first radiating surface element cosisting of a metal mesh or a perforated plate and a second radiating surface element consisting of a metal mesh or a perforated plate, said elements being so arranged as to enclose between them the flame holes of said gas burner, and a reflector plate in the form of a dish or an inverted truncated cone being positioned over said double heat-radiating elements in co-axial alignment therewith.

3. A heater unit as claimed in Claim 2, wherein a reflector shade is secured to the top of said burner above said reflector plate.

4. A heater unit as claimed in any one of Claims 1 to 3, wherein said reflector plate is located in contact with said second heat-radiating surface element.

5. A heater unit as claimed in any one of Claims 1 to 3, wherein said reflector plate is spaced from said second heat-radiating surface element.

6. A heater unit as claimed in any one of Claims 1 to 3, wherein said reflector plate is brought into close contact with said second heat-radiating surface element only in certain parts but is spaced therefrom in other parts.

EP 0 374 322 A1

# F I G. 1

## F I G. 2

## F I G. 3

## F I G. 4

# F I G. 5

# F I G. 6

# F I G. 7

# F I G. 8

# F I G. 9

| | European Patent Office | EUROPEAN SEARCH REPORT | Application Number |
|---|---|---|---|
| | | | EP  88 31 2225 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4458663 (KANESAKA ICHIRO)<br>* claims 1-12; figures 1-5 *<br>--- | 1, 2, 4, 5, 6 | F24C1/12<br>A01K31/20 |
| X | JP-U-56025/1982 (KANESAKA ICHIRO)<br>* the whole document *<br>--- | 1, 2, 4, 5, 6 | |
| A | US-A-2985137 (HORNE)<br>* column 4, line 60 - column 4, line 72 *<br>* column 6, line 33 - column 6, line 44; figures 1, 2 *<br>--- | 1, 3 | |
| A | POWER.<br>vol. 112, no. 4, April 1968, NEW YORK US<br>page 196 - 197;<br>"Gas heaters need adequate ventilating air"<br>----- | 1, 3 | |

|  |
|---|
| TECHNICAL FIELDS SEARCHED (Int. Cl.5 ) |
| F24C<br>A01K<br>F23D |

The present search report has been drawn up for all claims

| Place of search | Date of completion of the search | Examiner |
|---|---|---|
| THE HAGUE | 01 AUGUST 1989 | VANHEUSDEN J. |